# EUROPÄISCHE PATENTANMELDUNG

(11) **EP 3 970 476 A1**
(43) Veröffentlichungstag der Anmeldung: **23.03.2022**
(21) Anmeldenummer: 20000387.9
(22) Anmeldetag: 27.10.2020
(51) Int. Cl.: A01G 9/033

(54) **MODULE DACHBEGRÜNUNG**

(30) Priorität: 22.09.2020 DE 202020004146 U
(71) Anmelder: Comma GmbH, 21423 Winsen Luhe (DE)
(72) Erfinder: Die Erfindernennung liegt noch nicht vor
(74) Vertreter: Frick, Oliver Sebastian

(57) **Zusammenfassung**

Modulare Dachbegrünung aus einer verzinkten Stahlwanne.

## Beschreibung

Die vorliegende Erfindung betrifft die Bepflanzung und Kühlung von Modulen (Büro- und Wohncontainer, nachfolgend Module genannt).

Ein konventionelles Modul wird als Büro- und Wohncontainer in Stahlbauweise errichtet. Deshalb erwärmen sich die Module über die Dächer im Sommer leicht und kühlen im Winter schnell aus.

Durch die Module Dachbegrünung können neue und bestehende Module mit Blumenerde und Blumensamen bepflanzt werden. Hierdurch wird das Modul besser isoliert und kann die Wärme im Winter länger halten und im Sommer die Erwärmung des Modules verzögern. Das Regenwasser wird durch die Blumenerde zur Regenrinne bzw. zur Abwasserleitung geführt. Dadurch kühlt das Regenwasser die Module zusätzlich.

Die Module Dachbegrünung verbessert dabei die Isolierung und führt insbesondere in den Städten zur Erweiterung von Grünflächen. Dies ist insbesondere vor dem Hintergrund relevant, da diverse Kommunen Module z.B. für Schulen und Kindergärten sowie zur Vergrößerung von Büroflächen einsetzen.

Eine genaue Beschreibung der Erfindung wird nachgereicht.

### Bezugszeichenliste

- 1.: Blende
- 2.: Hydrokultur und Kiesschicht
- 3.: Überläufe
- 4.: Streben
- 5.: Rinne
- 6.: Wasserauffang
- 7.: Twistlockhalterung und Twistlock
- 8.: der bestehende Unterbau
- 9.: Regenrinne und Fallrohr

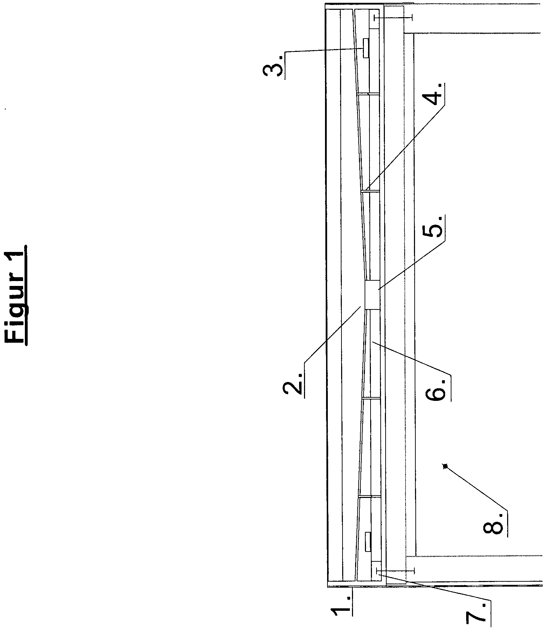

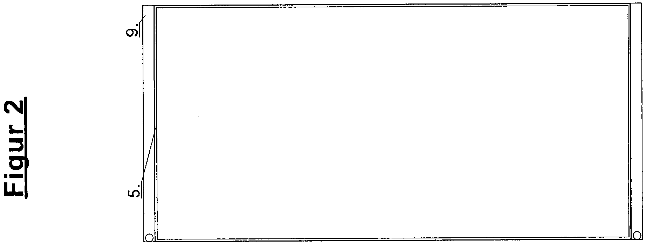

## Patentansprüche

1. Die modulare Dachbegrünung (Erfindung), zur Bepflanzung und Isolierung von Modulen (Büro- und Wohncontainer) und Flachdächern. Die modulare Dachbegrünung ist
**dadurch gekennzeichnet,**
**dass** die Erfindung das Regenwasser durch die Hydrokultur und Kiesschicht (2) in eine Wasserauffangwanne (6) geführt, die als Überlauf (3) bei Starkregen dient.

2. Daneben bietet die Erfindung zahlreiche Vorteile und ist
**dadurch gekennzeichnet,**
**dass** bei einem Überlaufen der Wasserauffangwanne (6) das Wasser über eine Rinne (5) in die Regenrinne und von dort in ein Fallrohr (9) geleitet wird. Dies dient zusätzlich als Überlauf bei Starkregen und die Erfindung kann damit zusätzlich an das öffentliche Entwässerungsnetz angeschlossen werden.

3. Die Erfindung ist
**dadurch gekennzeichnet,**
**dass** der bestehende Unterbau (8) über eine Twistlock und Twistlockhalterung (7) fest mit der Erfindung verbunden werden.

4. Die Erfindung ist
**dadurch gekennzeichnet,**
**dass** es mit einer Blende (1) verkleidet wird.

5. Die Erfindung ist
**dadurch gekennzeichnet,**
**dass** die Streben (4) die Kräfte nach unten abgeleitet werden, was der Erfindung eine besondere Stabilität verleiht und eine Verstärkung des bestehenden Daches entfallen lässt.

6. Die Erfindung ist
**dadurch gekennzeichnet,**
**dass** sie in dieser Form jederzeit zu montieren und auch wieder zu demontieren ist. Die Dachhaut des bereits vorhandenen oder zu errichtenden Gebäudes (8) bleibt von dieser Baumaßnahme der Dachbegrünung völlig unberührt.

7. Zudem ist die Erfindung
**dadurch gekennzeichnet,**
**dass** ebenfalls durch zusätzliche Abstütztposten überall als Bahnsteigüberdachung sowie als Bus- und Aufenthaltshäuschen und Raucherräume aufgesetzt werden können.
